# EUROPÄISCHE PATENTSCHRIFT

(11) **EP 2 158 475 B1**
(45) Veröffentlichungstag und Bekanntmachung des Hinweises auf die Patenterteilung: **13.07.2016**
(21) Anmeldenummer: 08758869.5
(22) Anmeldetag: 30.05.2008
(51) Int. Cl.: G02B 21/00, G01N 21/64

(54) **WELLENLÄNGENSENSITIVER OPTISCHER AUFBAU UND DESSEN VERWENDUNG**
WAVELENGTH SENSITIVE OPTICAL ASSEMBLY AND USE THEREOF
MONTAGE OPTIQUE SENSIBLE AUX LONGUEURS D'ONDE , ET SON UTILISATION

(30) Priorität: 01.06.2007 DE 102007025688
(43) Veröffentlichungstag der Anmeldung: 03.03.2010
(73) Patentinhaber: Max-Planck-Gesellschaft zur Förderung der Wissenschaften e.V., 80539 München (DE)
(72) Erfinder: KASTRUP, Lars, 37083 Göttingen (DE); WESTPHAL, Volker, 30161 Hannover (DE)
(74) Vertreter: REHBERG HÜPPE + PARTNER
(86) Internationale Anmeldenummer: PCT/EP2008/004291
(87) Internationale Veröffentlichungsnummer: WO 2008/145371

(56) Entgegenhaltungen:
- EP-A1- 1 662 296
- DE-A1- 10 012 462
- DE-A1- 10 154 699
- DE-A1-102005 013 116
- DE-A1-102005 013 969
- JP-A- 2003 167 198
- KLAR T A ET AL: "FLUORESCENCE MICROSCOPY WITH DIFFRACTION RESOLUTION BARRIER BROKEN BY STIMULATED EMISSION" PROCEEDINGS OF THE NATIONAL ACADEMY OF SCIENCES OF USA, NATIONAL ACADEMY OF SCIENCE, WASHINGTON, DC.; US, Bd. 97, Nr. 15, 18. Juli 2000 (2000-07-18), Seiten 8206-8210, XP001097238 ISSN: 0027-8424
- KLAR T A ET AL: "Breaking Abbe's diffraction resolution limit in fluorescence microscopy with stimulated emission depletion beams of various shapes" PHYSICAL REVIEW E. STATISTICAL PHYSICS, PLASMAS, FLUIDS, ANDRELATED INTERDISCIPLINARY TOPICS, AMERICAN INSTITUTE OF PHYSICS, NEW YORK, NY, US, Bd. 64, Nr. 6, 1. Januar 2001 (2001-01-01), Seiten 66613/1-9, XP002384347 ISSN: 1063-651X
- V. WESTPHAL ET AL.: "Lateral resolution of 28 nm (lambda/25) in far-field fluorescence microscopy" APPLIED PHYSICS B, Bd. 77, 2003, Seiten 377-380, XP002498531
- WESTPHAL V ET AL: "Laser-diode-stimulated emission depletion microscopy" APPLIED PHYSICS LETTERS, AIP, AMERICAN INSTITUTE OF PHYSICS, MELVILLE, NY, Bd. 82, Nr. 18, 5. Mai 2003 (2003-05-05), Seiten 3125-3127, XP012033972 ISSN: 0003-6951
- MARIANO BOSSI ET AL: "Breaking the diffraction resolution barrier in far-field microscopy by molecular optical bistability" NEW JOURNAL OF PHYSICS, INSTITUTE OF PHYSICS PUBLISHING, BRISTOL, GB, Bd. 8, Nr. 11, 1. November 2006 (2006-11-01), Seiten 275-275, XP020107591 ISSN: 1367-2630

## Beschreibung

### TECHNISCHES GEBIET DER ERFINDUNG

Die Erfindung bezieht sich auf einen optischen Aufbau mit den Merkmalen des Oberbegriffs des Patentanspruchs 1.

Soweit in den Patentansprüchen und der folgenden Beschreibung nur von zwei optisch unterschiedlichen Lichtkomponenten die Rede ist, so schließt dies das fakultative Auftreten weiterer Lichtkomponenten ausdrücklich nicht aus.

### STAND DER TECHNIK

In der so genannten STED-Fluoreszenzlichtmikroskopie ist es bekannt, eine Probe, die zunächst mit Anregungslicht zur Fluoreszenz angeregt wurde, vor dem Erfassen von Fluoreszenzlicht, das von der Probe spontan emittiert wird, bis auf einen räumlich eng begrenzten Bereich mit Abregungslicht wieder abzuregen. Wenn dieser Bereich die Nullstelle eines Interferenzmusters des Abregungslichts ist und die Intensität des Abregungslichts hoch ist, ist es möglich, die räumlichen Abmessungen dieses Bereichs, aus dem das spontan emittierte Fluoreszenzlicht ausschließlich stammen kann, unter die Beugungsgrenze bei der Wellenlänge des verwendeten Lichts abzusenken. Dies bedeutet eine wesentliche Erhöhung der räumlichen Auflösung beim Abbilden der Probe durch das spontan emittierte Fluöreszenzlicht.

Typischerweise wird das Interferenzmuster des Abregungslichts mit Hilfe eines Spatial-Light-Modulators erzeugt, mit dem einfallende ebene Phasenfronten des Abregungslichts gezielt deformiert werden. So können beispielsweise die Phasenfronten in einem Zentralbereich nahe der optischen Achse gegenüber den Phasenfronten in der Peripherie verzögert werden. Hieraus resultiert beim Fokussieren des Abregungslichts ein Interferenzmuster mit einer Nullstelle am Fokuspunkt, die in Richtung der optischen Achse zwischen zwei Hauptmaxima der Lichtintensitätsverteilung und in der Fokalebene innerhalb eines Rings schwacher Intensität liegt. Ein anderes, Doughnut-förmiges Interferenzmuster mit einer Nulllinie längs der optischen Achse durch den Fokuspunkt kann dadurch erzielt werden, dass die einfallenden ebenen Wellenfronten des Abregungslichts mit einer um die optische Achse wendelförmig bis zu einer Wellenlänge des Abregungslichts ansteigenden Phasenverzögerung versehen werden.

In bekannten STED-Mikroskopen wird das derart bezüglich seiner Phasenfronten aberrierte Abregungslicht mit dem Anregungslicht zusammengeführt und in ein sowohl das Anregungslicht und das Abregungslicht in die jeweilige Probe fokussierendes als auch von der Probe kommendes Fluoreszenzlicht auffangendes Objektiv gerichtet (siehe z. B. DE 10 2005 020 003 A1). Das Fluoreszenzlicht von der Probe kann dabei bekanntermaßen im Wesentlichen denselben Weg zurücklaufen, den das Anregungslicht vorgelaufen ist. So kann das Anregungslicht durch eine Lochblende hindurch treten, um mit dem Objektiv eine punktförmige Lichtquelle in die Probe abzubilden, und das Fluoreszenzlicht von der Probe kann durch dieselbe Lochblende zurücklaufen, wodurch eine so genannte konfokale Anordnung erreicht ist. Ein Vorteil hierbei ist, dass sich alle Änderungen des optischen Aufbaus zwischen der Lochblende und der Probe in gleicher Weise auf das Anregungslicht und das Fluoreszenzlicht auswirken. Groß ist jedoch der Justageaufwand, um die Strahlengänge des Anregungslichts einerseits und des Abregungslichts andererseits genau koaxial zueinander auszurichten.

Eine ähnliche Problematik tritt in der GSD-Fluoreszenzlichtmikroskopie auf, bei der der fluoreszenzfähige Grundzustand eines Fluoreszenzfarbstoffs in einer Probe zunächst bis auf einen räumlich eng begrenzten Bereich mit Entvölkerungslicht entvölkert wird, bevor die Probe mit Anregungslicht zur Fluoreszenz angeregt wird, um Fluoreszenzlicht von der Probe zu erfassen. Wenn der räumlich eng begrenzte Bereich die Nullstelle eines Interferenzmusters des Entvölkerungslicht ist und die Intensität des Entvölkerungslicht hoch ist, ist es möglich, die räumlichen Abmessungen dieses Bereichs, aus dem das Fluoreszenzlicht ausschließlich stammen kann, unter die Beugungsgrenze bei der Wellenlänge des verwendeten Lichts abzusenken. Dies bedeutet auch hier eine wesentliche Erhöhung der räumlichen Auflösung beim Abbilden der Probe durch das Fluoreszenzlicht. In der GSD-Fluoreszenzlichtmikroskopie sind das Entvölkerungslicht und das Anregungslicht, die dieselbe Wellenlänge aufweisen können, auf eine gemeinsame optische Achse zusammenzuführen.

Die beschriebenen Aberrationen von ebenen Wellenfronten des Abregungslichts können neben dem schon erwähnten Spatial-Light-Modulator durch Phasenfilter (siehe z. B. DE 10 2006 011 556 A1), Phasenverzögerungselemente, beispielsweise aufgedampft auf eine planparallele Glasplatte, oder durch eine gestufte oder eine auch als Phasenuhr bezeichnete wendelförmige Glasplatte bewirkt werden.

Die Verwendung so genannter Spatial-Light-Modulatoren ist zwar insoweit günstig, als dass theoretisch beliebig geformte Wellenfronten generiert werden können. Allerdings ist eine von der aufgeprägten Modulation der Phasenverschiebung unabhängige Beeinträchtigung der Strahlqualität durch Spatial-Light-Modulatoren festzustellen.

Bei optischen Bauteilen mit Phasenverzögerungselementen und/oder gestufter oder wendelförmiger Dicke ist zwar neben der gewünschten Variation der Phasenfronten keine Beeinträchtigung des durchlaufenden Abregungslichts zu erwarten; dafür sind diese Bauteile aber nur für Abregungslicht in einem kleinen Wellenlängenbereich geeignet.

Die EP 1 662 296 A1 beschreibt einen optischen Aufbau mit den Merkmalen des Oberbegriffs des Patentanspruchs 1, bei der die beiden Lichtkomponenten derart unterschiedliche Polarisation aufweisen, dass die Wellenfronten der einen Lichtkomponente durch einen Spatial Light Modulator deformiert werden, während die Wellenfronten der anderen Lichtkomponente durch den Spatial Light Modulator undeformiert hindurchtreten. Die Strahlengänge der beiden Lichtkomponenten, beispielsweise des Anregungslichts und des Abregungslichts bei einem STED-Fluoreszenzlichtmikroskop, müssen daher nicht getrennt werden. Die bekannten Beeinträchtigungen der Strahlqualität durch einen Spatial Light Modulator treten hier allerdings bei beiden Lichtkomponenten auf.

Die Druckschrift JP 2003 167198 A betrifft ein STED-Mikroskop mit einer Laserquelle, die Licht mit einer fundamentalen Wellenlänge emittiert. Indem das Licht der fundamentalen Wellenlänge einen frequenzverdoppelnden Kristall passiert, wird zusätzlich Licht mit der halben Wellenlänge generiert. Das Licht mit der fundamentalen Wellenlänge wird als STED-Licht verwendet und das frequenzverdoppelte Licht dient als Anregungslicht, das koaxial zu dem STED-Licht entlang einem gemeinsamen optischen Weg bis hin zur Probe propagiert. Damit passieren sowohl das Anregungslicht als auch das STED-Licht gemeinsam ein Phasenfilter, das sich in ihrem gemeinsamen optischen Weg befindet. Das Phasenfilter weist zwei verschiedene Bereiche mit unterschiedlichen Dicken auf. Wenn der Dickenunterschied einem optischen Wegunterschied von λ/2 in Bezug auf die fundamentale Wellenlänge entspricht, hat dies zur Folge, dass der Wellenfront des STED-Lichts beim Passieren des Phasenfilters in den beiden Bereichen ein Phasenunterschied von π aufgeprägt wird, d. h. die Wellenfront des STED-Lichts wird moduliert. Für das frequenzverdoppelte Anregungslicht hingegen bedeutet der Dickenunterschied einen Phasenunterschied von 2 π, d. h. effektiv erfolgt keine Modulation der Wellenfront des Anregungslichts. Voraussetzung für die Funktion des Phasenfilters ist, dass sich die Wellenlängen des STED-Lichts und des Anregungslichts genau um einen Faktor 2 unterscheiden. Eine weitere Vorraussetzung ist, dass das Phasenfilter aus einem Material gebildet ist, das keine Dispersion aufweist, d. h. die Brechungsindices müssen für die fundamentale und die frequenzverdoppelte Wellenlänge gleich sein.

### AUFGABE DER ERFINDUNG

Der Erfindung liegt die Aufgabe zugrunde, einen optischen Aufbau mit den Merkmalen des Oberbegriffs des Patentanspruchs 1 aufzuzeigen, bei dem z. B. der Justageaufwand für das Zusammenführen des Abregungslichts und des Anregungslichts bei einem STED-Fluoreszenzlichtmikroskop oder des Entvölkerungslichts und des Anregungslichts bei einem GSD-Fluoreszenzlichtmikroskop ohne Beeinträchtigungen der Strahlqualität deutlich vereinfacht ist. Weiterhin soll ein für einen solchen optischen Aufbau besonders geeignetes optisches Bauteil aufgezeigt werden, das auch bei anderen Verwendungen Vorteile hat.

### LÖSUNG

Die Aufgabe der Erfindung wird durch einen optischen Aufbau mit den Merkmalen des Patentanspruchs 1 gelöst. Bevorzugte Ausführungsformen des optischen Aufbaus finden sich in den abhängigen Patentansprüchen 2 bis 15.

### BESCHREIBUNG DER ERFINDUNG

Bei dem neuen optischen Aufbau treten zwei unterschiedliche Lichtkomponenten durch ein optisches Bauteil hindurch, wobei das optische Bauteil die Wellenfronten' der einen Lichtkomponente so deformiert, dass sich die Intensitätsverteilung der einen Lichtkomponente in einem Projektionsraum durch Interferenz mit sich selbst von der Intensitätsverteilung der anderen Lichtkomponente in dem Projektionsraum unterscheidet. Konkret ist das optische Bauteil zu diesem Zweck für die andere Lichtkomponente phasenkorrigiert. Zumindest besteht die Möglichkeit einer Phasenkorrektur beispielsweise durch Veränderung des zu der anderen Lichtkomponente gehörigen Brechungsindexes eines Teils des optischen Bauteils.

Indem sich die Strahlengänge beider Lichtkomponenten durch das optische Bauteil hindurch erstrecken, können beide Lichtkomponenten über einen großen Teil des optischen Aufbaus koaxial geführt werden, so dass eine relative Justage ihrer Strahlengänge zumindest über diesen Teil des optischen Aufbaus hinweg nicht erforderlich ist. Änderungen an dem optischen Aufbau in diesem Teil wirken sich in gleicher Weise auf beide Lichtkomponenten aus. Die einzigen Unterschiede für die beiden Lichtkomponenten bestehen darin, dass die Wellenfronten der einen Lichtkomponente von dem optischen Bauteil deformiert werden, während diese Deformation für die andere Lichtkomponente unterbleibt, obwohl ihr Strahlengang ebenfalls durch das optische Bauteil führt, und dass die Intensitätsverteilung der einen Lichtkomponente im Zentrum des Fokusbereichs des auf das optische Bauteil folgenden Objektivs, in dem die Intensitätsverteilung der anderen Lichtkomponente konzentriert ist, aufgrund der Deformation ihrer Wellenfronten eine Nullstelle aufweist. Die Nullstelle kann dabei ein Nullpunkt, aber auch eine Nulllinie, die typischerweise in Richtung der optischen Achse verläuft, oder eine Nullebene sein, die typischerweise normal zu der optischen Achse verläuft. Die voranstehende Definition der vorliegenden Erfindung ist ersichtlich weiter als Ihre Anwendungsmöglichkeit auf dem Gebiet der STED- oder GSD-Fluoreszenzlichtmikroskopie. So kann der erfindungsgemäße optische Aufbau auch auf anderen technischen Gebieten verwendet werden, wie beispielsweise für optische Pinzetten zum Einfangen von Partikeln und deren Manipulation mit Licht oder auch für optische Atomfallen.

Zum Beispiel beim Einsatz des optischen Aufbaus in der Fluoreszenzlichtmikroskopie ist es möglich, dass auch der Strahlengang von mit dem Objektiv aus dem Fokusbereich erfasstem Licht, also insbesondere von Fluoreszenzlicht, durch das optische Bauteil verläuft. Dabei kann das optische Bauteil auch für dieses Licht phasenkorrigiert oder zumindest phasenkorrigierbar sein. Dies ist aber nicht zwingend erforderlich, da ein Phasenfehler des durch das optische Bauteil hindurch getretenen Lichts beispielsweise beim konfokalen Detektieren von Fluoreszenzlicht nur einen Intensitätsverlust bedeutet, der entsprechend bei kleinen Phasenfehlern klein bleibt.

Um die Strahlengänge der einen Lichtkomponente und der anderen Lichtkomponente von unterschiedlichen Lichtquellen kommend koaxial in den neuen optischen Aufbau einzukoppeln, kann ein gemeinsamer Lichtleiter vorgesehen sein. Dieser ist so auszuwählen, dass er selber zu keinen störenden Aberrationen der Wellenfronten führt. Gut geeignet als Lichtleiter ist eine Singlemode-Faser. Idealer Weise weist der Lichtleiter die Singlemode-Eigenschaft sowohl für die eine als auch die andere Lichtkomponente auf. Besonders wichtig ist die Singlemode-Eigenschaft in Bezug auf die eine Lichtkomponente, deren Phasenfronten mit dem optischen Bauteil gezielt deformiert werden sollen. Weiterhin erhält die Singlemode-Faser vorzugsweise die Polarisation der von ihr geleiteten Lichtkomponenten. Der Fachmann erkennt, dass die polarisationserhaltende Eigenschaft der Singlemode-Faser Voraussetzung für das Funktionieren einiger eine Singlemode-Faser verwendenden Ausführungsformen der vorliegenden Erfindung ist.

Wenn die beiden Lichtkomponenten stärker unterschiedliche Wellenlängen aufweisen, kann es schwierig sein, hierfür eine Faser als Lichtleiter zu finden, die für beide Wellenlängen eine Singlemode-Faser ist. Aber nicht nur dann kann auf die Möglichkeit zurückgegriffen werden, beide Lichtkomponenten auf das Loch einer Lochblende zu fokussieren, das im Brennpunkt einer auf der anderen Seite der Lochblende angeordneten Linse liegt. Die Linse formt aus dem aus der Lochblende austretenden Licht Wellenfronten, die weitestgehend normal zu der optischen Achse orientiert sind. Dabei auftretende Abweichungen von ideal ebenen Wellenfronten bleiben unbeachtlich, solange ein Winkel zwischen den Strahlengängen der beiden Lichtkomponenten vor der Lochblende klein bleibt.

Die voranstehend anhand von Beispielen mit einem Lichtleiter und einer Lochblende erläuterte Baugruppe für das koaxiale Einkoppeln der beiden Lichtkomponenten in den neuen optischen Aufbau wird allgemein als Raumfilter bezeichnet und kann auch in dem Fachmann grundsätzlich für Raumfilter bekannter anderer Weise ausgebildet sein.

Zum Beispiel im Falle der Anwendung des neuen optischen Aufbaus in der Fluoreszenzlichtmikroskop kann der Strahlgang von mit dem Objektiv aus dem Fokusbereich erfasstem Licht, also insbesondere von Fluoreszenzlicht, ebenfalls durch den Lichtleiter und/oder die Lochblende verlaufen, wobei dann ein Detektor für das Fluoreszenzlicht ebenso wie die Lichtquellen für die beiden Lichtkomponenten hinter dem Lichtleiter bzw. der Lochblende angeordnet ist.

Bei dem neuen optischen Aufbau weist das optische Bauteil über seiner aktiven Fläche mindestens einen Sprung oder eine Unstetigkeit von mindestens einem Viertel, vorzugsweise von mindestens der Hälfte der Wellenlänge der einen Lichtkomponente in der Phasenverschiebung auf, die es der einen Lichtkomponente aufprägt, wobei die Phasenverschiebung, die das optische Bauteil der anderen Lichtkomponente aufprägt, so eingestellt oder einstellbar ist, dass sie sich über den Sprung, der Unstetigkeit oder die lokale Variation hinweg nicht ändert. Dabei sind kleinere Änderungen der Phasenverschiebung, die das optische Bauteil auch der anderen Lichtkomponente aufprägt, im Rahmen der Erfindung durchaus denkbar und zulässig. So kann beispielsweise beiden Lichtkomponenten mit dem optischen Bauteil eine gleiche Grundphasenverschiebung aufgeprägt werden. In diesem Fall weist aber die Phasenverschiebung, die der einen Lichtkomponente aufgeprägt wird, zusätzlich den Sprung oder die Unstetigkeit über mindestens eine normal zu der optischen Achse des optischen Bauteils verlaufende Richtung auf. Im Rahmen der vorliegenden Erfindung ist es auch zulässig, dass die andere Lichtkomponente durch das optische Bauteil ebenfalls eine Phasenverschiebung mit einem Sprung, einer Unstetigkeit oder einer Variation erfährt, wenn dieser Sprung, die Unstetigkeit oder die Variation deutlich kleiner, d. h. heißt maximal halb so groß, vorzugsweise maximal 20 %, am meisten bevorzugt maximal 10 % so groß ist wie das, was der einen Lichtkomponente aufgeprägt wird. Überdies sind relative Phasenverschiebungen zwischen den beiden Lichtkomponenten oder auch über der Wellenfront einer der Lichtkomponenten unerheblich, wenn sie ein ganzzahliges Vielfaches der Wellenlänge des jeweiligen Lichts betragen. Unter einer Unstetigkeit in der Phasenverschiebung ist nicht nur das zu verstehen, was exakt unter die mathematische Definition einer Unstetigkeit fällt, sondern auch alles, was sich in seinen praktischen optischen Auswirkungen beim Einsatz des neuen optischen Aufbaus hiervon nicht unterscheidet. Dasselbe gilt für einen Sprung in der Phasenverschiebung. Eine lokale Variation in der Phasenverschiebung zeichnet sich dadurch aus, dass sie über einen Teil des optischen Bauteils erfolgt, der sich in der relevanten Richtung über maximal 50 %, vorzugsweise maximal 25 % und am meisten bevorzugt maximal 10 % der Gesamterstreckung des optischen Bauteils erstreckt.

Vorzugsweise weist ein optisches Bauteil in jeder normal zu seiner optischen Achse verlaufenden Richtung einen Sprung, eine Unstetigkeit oder eine lokale Variation von mindestens einer viertel Wellenlänge in der Phasenverschiebung auf, die es der Lichtkomponente aufprägt. Die Phasenverschiebungen der anderen Lichtkomponente über diese Richtungen sind, wenn überhaupt vorhanden, jeweils zumindest deutlich geringer.

In einer konkreten Ausführungsform des optischen Bauteils kann die optisch aktive Fläche des optischen Bauteils zum Beispiel einen kreisrunden Zentralbereich und eine sich darum kreisringförmig erstreckende Peripherie aufweisen, zwischen denen der Unterschied bei der Phasenverschiebung der einen Lichtkomponente die Hälfte ihrer Wellenlänge beträgt. In einer anderen konkreten Ausführungsform prägt das optische Bauteil der einen Lichtkomponente einen in Umfangsrichtung um seine optische Achse bis auf ihre Wellenlänge zunehmenden Unterschied bei der Phasenverschiebung auf.

Bei dem optischen Bauteil grenzen zwei unterschiedliche Bereiche mit unterschiedlichem Dispersionsverhalten n(λ) an dem Sprung oder der Unstetigkeit in der Phasenverschiebung aneinander. So stellen zwei aneinander angrenzende Bereiche für die eine Lichtkomponente unterschiedliche optische Weglängen und für die andere Lichtkomponente gleiche optische Weglängen bereit.

Dabei können nicht nur die beiden unterschiedlichen Bereiche in Richtung der optischen Achse des optischen Bauteils jeweils durch planparallele Flächen begrenzt sein, sondern auch das gesamte optische Bauteil kann in Richtung seiner optischen Achse durch zwei parallele Flächen begrenzt sein.

Konkret kann das optische Bauteil in seinen unterschiedlichen Bereichen unterschiedliche Materialien oder unterschiedliche Materialkombinationen aufweisen. Hierzu zählt es als bevorzugte Ausführung auch, dass in den unterschiedlichen Bereichen dieselben Materialien in unterschiedlichen Dicken vorgesehen sind.

Besonders bevorzugt ist es, wenn mindestens eines der Materialien in seinem Dispersionsverhalten n(λ) veränderbar ist, um eine Anpassung des optischen Bauteils an das Licht der einen und/oder der anderen Wellenlänge vorzunehmen. Dazu kann mindestens eines der Materialien des optischen Bauteils ein temperaturabhängiges Dispersionsverhalten n(λ, T) aufweisen, wobei diesem Material eine Temperiervorrichtung zugeordnet ist; oder mindestens eines der Materialien kann elektrisch veränderbare Dispersionseigenschaften n(λ, U) aufweisen, wobei diesem Material eine mit einer Spannung U beaufschlagbare Elektrode zugeordnet ist. Des Weiteren kann das Dispersionsverhalten des mindestens einen Materials durch ein Magnetfeld (n(λ, B)) oder durch die Konzentration mindestens eines Bestandteils des Materials (n(λ, c)) veränderbar sein.

Besonders günstig ist es bei dem optischen Bauteil, wenn der Brechungsindexunterschied zwischen dem Festkörper und dem Formkörper so veränderbar ist, dass er für eine Lichtkomponente in einen Unterschied bei den optischen Weglängen von mindestens einem Viertel, vorzugsweise von mindestens der Hälfte der Wellenlänge der einen Lichtkomponente resultiert; während ein Unterschied bei den optischen Weglängen für eine andere Lichtkomponente mit anderen optischen Eigenschaften null ist

Als Material mit ausgeprägtem Dispersionsverhalten n(λ), das beispielsweise in Kombination mit einem Festkörper aus einem Material mit weniger stark ausgeprägtem Dispersionsverhalten zur Ausbildung des neuen optischen Bauteils geeignet ist, kommen insbesondere Polymere, Gele, Immersionsöle, Farbstofflösungen und Flüssigkristalle in Frage.

Bei einer besonders bevorzugten Ausführungsform des optischen Bauteils ist eine Küvette vorgesehen, bei der sich die Tiefe ihres Aufnahmeraums in Richtung der optischen Achse des optischen Bauteils über einer normal zu seiner optischen Achse verlaufenden Richtung ändert. In den Aufnahmeraum der Küvette kann ein fluides Material eingebracht werden, das zusammen mit dem Festkörper der Küvette, der nach außen durch planparallele Flächen begrenzt sein kann, die gewünschten optischen Eigenschaften des optischen Bauteils bereitstellt.

Ein optisches Bauteil, wie es bei dem neuen optischen Aufbau bevorzugt zur Anwendung kommt, kann auch vorteilhaft für Licht nur einer Wellenlänge eingesetzt werden. Die Besonderheit besteht dann darin, dass sich an einen Festkörper, der für Licht mindestens einer Wellenlänge in unterschiedlichen Bereichen des optischen Bauteils unterschiedliche optische Weglängen parallel zu der optischen Achse des Bauteils bereitstellt, in mindestens einem der Bereiche mindestens ein Formkörper längs der optischen Achse anschließt, wobei ein Brechungsindexunterschied zwischen dem Festkörper und dem Formkörper veränderbar ist, um die aufgrund des Festkörpers unterschiedlichen optischen Weglängen zu variieren. So kann das optische Bauteil insgesamt an die Wellenlänge des Lichts, für das es aktuell eingesetzt wird, adaptiert werden. Konkret kann beispielsweise ein Sprung in der optischen Weglänge, die das optische Bauteil ebenen Phasenfronten aufprägt, exakt auf die halbe Wellenlänge des Lichts abgestimmt werden.

Weiterhin kann ein optisches Bauteil, wie es bei dem neuen optischen Aufbau bevorzugt zur Anwendung kommt, so genutzt bzw. dahingehend modifiziert werden, dass es auch die Wellenfronten der anderen Lichtkomponente deformiert und zwar mit zu den Deformationen der einen Lichtkomponente entgegengesetztem Vorzeichen. Dabei ist es besonders bevorzugt, wenn die Beträge der Deformationen beider Lichtkomponenten bezogen auf deren jeweilige Wellenlänge gleich groß sind. Hierfür ist zum Beispiel ein Material mit ausgeprägtem Dispersionsverhalten n(λ) auszuwählen, bei dem sich im Vergleich zu dem Brechungsindex n eines anderen Materials des optischen Bauteils mit weniger stark ausgeprägtem Dispersionsverhalten für die eine Lichtkomponente eine positive Brechungsindexdifferenz Δn und für die andere Lichtkomponente gleichzeitig eine negative Brechungsindexdifferenz -Δn ergibt oder umgekehrt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand von konkreten Ausführungsbeispielen unter Bezugnahme auf die beigefügten Zeichnungen näher erläutert und beschrieben.
- **Fig. 1**: zeigt das Grundprinzip eines Phasenfilters, wie es bereits im Stand der Technik bekannt ist.
- **Fig. 2**: zeigt Dispersionskurven für die Kombination eines Glassubstrats (BK7) mit einer Mischung zweier Immersionsöle (Cargille 23°C-Öl und 37°C-Öl) als angrenzendes Medium. Links in Fig. 2 sind unterschiedliche Mischungsverhältnisse der beiden Öle mit von unten nach oben aufsteigendem Anteil des 23°C-Öls aufgetragen, während rechts die Dispersionskurven für eine 1:1-Mischung für von unten nach oben aufsteigende Temperaturen aufgetragen sind.
- **Fig**. **3**: zeigt die Auswirkung eines Wellenlängen-selektiven Phasenfilters auf ebene Wellenfronten von Licht unterschiedlicher Wellenlänge.
- **Fig. 4**: zeigt drei konkrete Ausführungsformen eines Wellenlängen-selektiven Phasenfilters auf Basis einer Küvette mit in Richtung der optischen Achse gestuftem Aufnahmeraum.
- **Fig. 5**: zeigt drei weitere Ausführungsformen des Wellenlängen-selektiven Phasenfilters.
- **Fig. 6**: zeigt die Verwendung eines Wellenlängenselektiven Phasenfilters in einem optischen Aufbau eines STED-Fluoreszenzlichtmikroskops, wobei zwei unterschiedliche Lagen eines Detektors zum Registrieren von Fluoreszenzlicht, das von der Probe spontan emittiert wird, angedeutet sind; und

- **Fig. 7**: zeigt ein Raumfilter mit einer Lochblende als Alternative zu einem in dem optischen Aufbau gemäß Fig. 6 verwendeten Raumfilter mit einem Lichtleiter.

### FIGURENBESCHREIBUNG

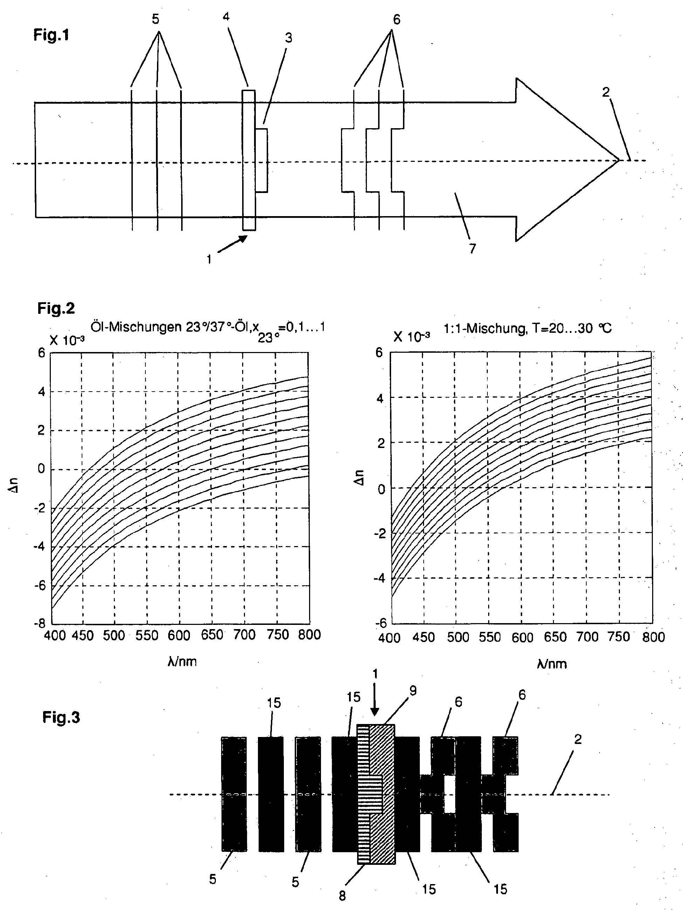

**Fig. 1** zeigt ein Phasenfilter 1, das im Bereich seiner optischen Achse 2 ein Phasenverzögerungselement 3 auf einem Glassubstrat 4 aufweist. Das Phasenverzögerungselement 3 sorgt im Zentralbereich des Phasenfilters 1 gegenüber der Peripherie des Phasenfilters 1 für eine Verzögerung von in Richtung der optischen Achse 2 einfallenden ebenen Wellenfronten 5, wie sie bei den modifizierten Wellenfronten 6 skizziert ist. Dabei entspricht die relative Phasenverzögerung der modifizierten Wellenfronten 6 im Zentralbereich des Phasenfilters 1 einer halben Wellenlänge des hier betrachteten Lichts 7. Wenn die modifizierten Wellenfronten 6 mit einem Objektiv in einen Fokuspunkt fokussiert werden, bildet sich durch Interferenzeffekte am Fokuspunkt selbst eine Nullstelle der Intensitätsverteilung des Lichts 7 aus, die in Richtung der optischen Achse 2 zwischen zwei Hauptmaxima der Intensitätsverteilung eingeschlossen und in der Fokalebene von einem Ring schwacher Intensität des Interferenzmusters umgeben ist. Das Phasenfilter 1 gemäß Fig. 1 modifiziert einfallende Wellenfronten jeglicher Wellenlänge. Bei einer Wellenlänge, auf die das Phasenverzögerungselement 3 nicht abgestimmt ist, beträgt die relative Verzögerung der Wellenfronten im Zentralbereich des Phasenfilters 1 jedoch nicht eine halbe Wellenlänge, sondern einen von der Wellenlänge des dann betrachteten Lichts abhängigen Verzögerungswert. Die konkrete Phasenverschiebung hängt von den unterschiedlichen optischen Weglängen parallel zu der optischen Achse 2 durch das Phasenverzögerungselement 3 und durch die es radial umgebende Luft ab. Das planparallel begrenzte Substrat 4 sorgt nur für eine über den gesamten Querschnitt des Lichts 7 gleichmäßige Phasenverzögerung, d. h. für keine relative Phasenverzögerung über die einzelnen Wellenfronten.

In Verbindung mit **Fig. 2** skizziert **Fig. 3** die Möglichkeit, das Phasenfilter 1 so auszubilden, dass es einfallende ebene Wellenfronten 5 einer ersten Wellenlänge entsprechend Fig. 1 in modifizierte Wellenfronten 6 aberriert, während einfallende ebene Wellenfronten 15 einer anderen Wellenlänge undeformiert durch das Phasenfilter 1 hindurch treten. Dabei baut das Phasenfilter 1 auf zwei Materialien 8 und 9 auf, die längs der optischen Achse 2 hintereinander angeordnet sind. Die Kombination der beiden Materialien 8 und 9, d. h. das gesamte Phasenfilter 1 ist planparallel begrenzt; die Erstreckung des Materials 8 ist jedoch in dem Zentralbereich des Phasenfilters 1 nahe der optischen Achse 2 größer als in dessen Peripherie. Entsprechend ist die Erstreckung des Materials 9 parallel zu der optischen Achse 2 in dem Zentralbereich kleiner als in der Peripherie. Die Erstreckungsunterschiede der beiden Materialien 8 und 9 längs der optischen Achse 2 sind so auf ein Dispersionsverhalten n(λ) des Materials 9 abgestimmt, dass für die Wellenlängen λ der Wellenfronten 5 die Phasenverzögerung von λ/2 im Zentralbereich des Phasenfilters 1 resultiert. Gleichzeitig ist das Dispersionsverhalten n(λ) des Materials 9 aber auch so auf das Material 8 abgestimmt, dass für das Licht der Wellenfronten 15 mit einer anderen Wellenlänge die Brechungsindizes n beider Materialien 8 und 9 gleich sind.

Konkret kann das Material 9 beispielsweise ein Immersionsöl sein, das anhand der Dispersionskurven gemäß Fig. 2 bezüglich seiner Zusammensetzung oder seiner Temperatur so abgestimmt ist, dass es für die Wellenlänge λ der Wellenfronten 15 gegenüber dem Material 8 einen An-Wert von null aufweist. Für die Wellenlänge der Wellenfronten 5 muss der Δn-wert positiv sein, um die in Fig. 3 gezeigte Verzögerung der Wellenfronten 6 im Zentralbereich des Phasenfilters 1 zu erzeugen. Das Maß der Verzögerung kann dabei sowohl durch den An-Wert als auch durch den Unterschied in der Erstreckung der beiden Materialien 8 und 9 zwischen dem Zentralbereich und der Peripherie eingestellt werden. Grundsätzlich kann der An-Wert für die Wellenlänge der Wellenfronten 5 auch negativ sein, wobei die Wellenfronten 6 dann umgekehrt deformiert, dass heißt in ihrer Peripherie gegenüber ihrem Zentrum verzögert sind.

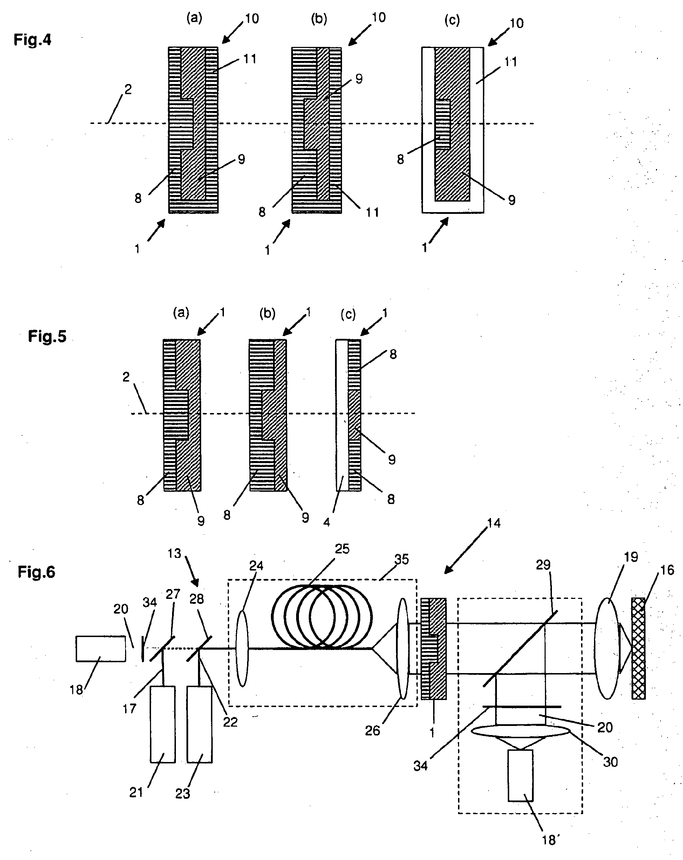

Für das Material 9 in Form eines Immersionsöls kann eine Küvette 10 vorgesehen sein, wie sie in **Fig. 4** in drei Ausführungsformen gezeigt ist und deren Aufnahmeraum in Richtung der optischen Achse 2 eine Tiefe aufweist, welche über einer Richtung normal zu der optischen Achse eine Stufe aufweist. Dabei entspricht die Küvette 10 gemäß Fig. 4(a) dem Phasenfilter 1 gemäß Fig. 3, bei dem das Material 8 im Zentralbereich des Phasenfilters 1 die größere axiale Erstreckung aufweist. Die Küvette 10 gemäß Fig. 4(b) illustriert den umgekehrten Fall. Das Material 9 zur Befüllung der Küvette 10 kann neben einem Dispersionsöl auch ein anderes fluides Material, wie beispielsweise ein flüssiges Polymer, ein Flüssigkristall oder eine Farbstofflösung sein. Die jeweils rechts zu sehende planparallele Wand 11 der Küvette 10 wirkt sich auf die relativen Phasenverschiebungen aufgrund der unterschiedlichen Materialverteilungen 8 und 9 nicht aus. Gemäß Fig. 4(c) weist die Küvette 10 zwei planparallele Wände 11 auf, wobei auf die Innenseite der hier links dargestellten Wand 11 im Zentralbereich des Phasenfilters 1 ein Festkörper aus dem Material 8 aufgesetzt ist. Trotz der etwas unterschiedlichen Ausführung entspricht die Funktionsweise dieses Phasenfilters 1 derjenigen gemäß Fig. 4(a).

**Fig. 5** zeigt drei verschiedene weitere Ausführungsformen eines Phasenfilters 1. Dabei entsprechend die Ausführungsformen (a) und (b) im Prinzip den Ausführungsformen der Küvette 10 gemäß den Fig. 4(a) und (b); hier liegen jedoch beide Materialien 8 und 9 als Festkörper vor. In Fig. 5(c) ist demgegenüber das Material 9 nur wie das Phasenverzögerungselement 3 gemäß Fig. 1 im Zentralbereich des Phasenfilters 1 vorgesehen, während sich das Material 8 ausschließlich in dessen Peripherie erstreckt. Beide Materialien 8 und 9 sind hier auf einem gemeinsamen Substrat 4 angeordnet. Das Substrat 4 ist aufgrund seiner planparallelen Begrenzung senkrecht zu der optischen Achse 2 in Bezug auf die Aberration der ebenen Wellenfronten neutral. Die Aberration der ebenen Wellenfronten wird hier nur durch einen Brechungsindexunterschied Δ(n) zwischen den Materialien 8 und 9 für die Wellenlänge der zu aberrierenden Wellenfronten bewirkt. Für die nicht zu aberrierenden Wellenfronten weisen die Materialien 8 und 9 hingegen aufgrund unterschiedlicher Dispersionseigenschaften n(λ) gleiche Brechungsindizes n auf.

**Fig. 6** skizziert einen optischen Aufbau 13 eines STED-Fluoreszenzlichtmikroskops 14. Das STED-Fluoreszenzlichtmikroskop 14 dient zur mikroskopischen Untersuchung einer Probe 16, wobei ein Fluoreszenzfarbstoff in der Probe 16, mit dem eine interessierende Struktur in der Probe 16 markiert ist, mit Anregungslicht 17 zu Fluoreszenz angeregt und das anschließend von dem Fluoreszenzfarbstoff spontan emittierte Fluoreszenzlicht mit einem Detektor 18 registriert wird. Dabei wird das Anregungslicht 17 mit demselben Objektiv 19 in die Probe 16 fokussiert, mit dem auch das Fluoreszenzlicht 20 von der Probe 16 auf den Detektor 18 abgebildet wird. Um die Ortsauflösung beim Abbilden der interessierenden Struktur der Probe aufgrund des registrierten Fluoreszenzlichts 20 zu erhöhen, wird neben dem Anregungslicht 17 von einem Laser als Anregungslichtquelle 21 auch Abregungslicht 22 von einem Laser als Abregungslichtquelle 23 eingesetzt. Das Abregungslicht 22 wird ebenfalls mit dem Objektiv 19 in die Probe 16 fokussiert. Durch selektive Aberration der Wellenfronten des Abregungslichts 22 mit dem Wellenlängen-selektiven Phasenfilter 1 wird jedoch die Intensität des Abregungslichts 22 nicht gemeinsam mit dem Anregungslicht 17 in dem Fokuspunkt fokussiert, sondern durch Interferenzeffekte bilden die modifizierten Wellenfronten des Abregungslichts 22 eine Intensitätsnullstelle des Abregungslichts an dem Fokuspunkt aus. Da das Phasenfilter 1 das Anregungslicht 17 aufgrund seiner unterschiedlichen Wellenlänge gegenüber dem Abregungslicht 22 nicht aberriert, kann auch das Anregungslicht 17 durch das Phasenfilter 1 hindurch treten. Ebenso kann das Fluoreszenzlicht 20 durch das Phasenfilter 1 hindurch treten und erst hinter dem Phasenfilter 1 von dem Anregungslicht 17 und dem Abregungslicht 22 abgetrennt werden. Bei dem Aufbau 13 gemäß Fig. 6 werden das Anregungslicht 17 und das Abregungslicht 22 gemeinsam über eine Optik 24 in ein Ende einer Singlemode-Faser 25 eingekoppelt, deren anderes Ende im Brennpunkt einer Linse 26 angeordnet ist, um sowohl aus dem Anregungslicht 17 als auch aus dem Abregungslicht 22 ebene Wellenfronten zu formen. Die ebenen Wellenfronten des Anregungslichts 17 laufen dann bis zu dem Objektiv 19 vor, von dem sie in die Probe 16 fokussiert werden. Sie treten dabei undeformiert durch das Phasenfilter 1 hindurch. Demgegenüber werden die ebenen Wellenfronten des Abregungslichts 22 von dem Phasenfilter 1 in der gewünschten Weise aberriert. Das Fluoreszenzlicht 20 im Rücklauf von der Probe 16 kann durch das Phasenfilter 1 ebenso wie das Anregungslicht 17 unbeeinflusst bleiben. Es mag aber auch aberriert werden, solange mindestens ein wesentlicher Anteil in die Singlemode-Faser 25 und zu dem Detektor 18 hinter den dichroitischen Spiegeln 27 und 28 gelangt, die das Anregungslicht 17 von der Anregungslichtquelle 21 und das Abregungslicht 22 von der Abregungslichtquelle 23 koaxial auf die Linse 24 ausrichten. Alternativ kann ein Detektor 18' auch so angeordnet sein, dass ein dichroitischer Spiegel 29 zwischen dem Objektiv 19 und dem Phasenfilter 1 das Fluoreszenzlicht 20 zu ihm auskoppelt, wobei eine der Linse 26 entsprechende Linse 30 zum Fokussieren des Fluoreszenzlichts 20 auf den Detektor 18' vorgesehen ist. Vor dem Detektor 18 bzw. 18' ist ein Fluoreszenzbandpassfilter 34 oder eine andere geeignete Einrichtung, wie beispielsweise ein Prisma oder Gitter mit Blende, angeordnet, um selektiv nur das Fluoreszenzlicht zu dem Detektor durchzulassen und reflektierte Anteile des Anregungslichts 17 oder des Abregungslichts 22 oder Licht noch anderer Wellenlängen von dem Detektor fern zu halten.

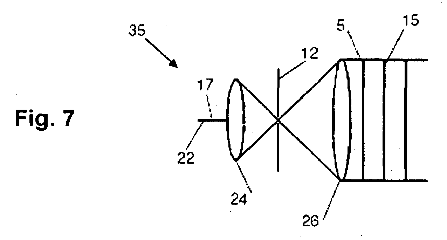

**Fig. 7** illustriert eine Alternative zu einer Baugruppe 35 des optischen Aufbaus 13 in Fig. 6, die gemeinhin als Raumfilter bezeichnet wird und die dazu dient, ebene und parallel zueinander verlaufende Wellenfronten 5, 15 aus dem Anregungslicht 17 und dem Abregungslicht 22 zu formen. Dabei ist statt der Singlemode-Faser 25 das Loch einer Lochblende 12, das auch als Pinhole bezeichnet wird, zwischen den Linsen 24 und 26 in deren hier zusammenfallenden Brennpunkten angeordnet. Die Lochblende 12 ist dann von Vorteil, wenn keine sowohl für die Wellenlängen des Anregungslichts 17 als auch des Abregungslichts 22 geeignete Singlemode-Faser 25 zur Verfügung steht.

**BEZUGSZEICHENLISTE**

| | | | |
|---|---|---|---|
| 1 | Phasenfilter | | |
| 2 | optische Achse | | |
| 3 | Phasenverzögerungselement | | |
| 4 | Substrat | 34 | Fluoreszenzbandpassfilter |
| 5 | einfallende Wellenfront | 35 | Raumfilter |
| 6 | modifizierte Wellenfront | | |
| 7 | Licht | | |
| 8 | Material | | |
| 9 | Material | | |
| 10 | Küvette | | |
| 11 | Wand | | |
| 12 | Lochblende | | |
| 13 | optischer Aufbau | | |
| 14 | STED-Fluoreszenzlichtmikroskop | | |
| 15 | ebene Wellenfront | | |
| 16 | Probe | | |
| 17 | Anregungslicht | | |
| 18 | Detektor | | |
| 19 | Objektiv | | |
| 20 | Fluoreszenzlicht | | |
| 21 | Anregungslichtquelle | | |
| 22 | Abregungslicht | | |
| 23 | Abregungslichtquelle | | |
| 24 | Optik | | |
| 25 | Single Mode-Faser | | |
| 26 | Linse | | |
| 27 | dichroitischer Spiegel | | |
| 28 | dichroitischer Spiegel | | |
| 29 | dichroitischer Spiegel | | |
| 30 | Linse | | |

## Patentansprüche

1. Optischer Aufbau mit einem Objektiv (19) zum Projizieren von zwei optisch unterschiedlichen Lichtkomponenten (17, 22) in einen Projektionsraum und mit einem optischen Bauteil (1) mit seiner optischen Achse das hindurchtretende Wellenfronten (5, 6) der einen Lichtkomponente (22) so deformiert, dass sich die Intensitätsverteilung der einen Lichtkomponente (22) in dem Projektionsraum durch Interferenz mit sich selbst von der Intensitätsverteilung der anderen Lichtkomponente (17) in dem Projektionsraum unterscheidet, wobei die Wellenfronten (15) der anderen Lichtkomponente (17) ebenso wie die Wellenfronten (5) der einen Lichtkomponente (22) durch das optische Bauteil (1) hindurchtreten, wobei das optische Bauteil (1) die Wellenfronten (15) der anderen Lichtkomponente (17) nicht deformiert und/oder für die andere Lichtkomponente (17) phasenkorrigiert oder phasenkorrigierbar ist, und wobei das optische Bauteil (1) über seiner optisch aktiven Fläche mindestens einen Sprung oder eine Unstetigkeit von mindestens einem Viertel der Wellenlänge der einen Lichtkomponente (22) in der Phasenverschiebung aufweist, die es der einen Lichtkomponente (22) aufprägt, wobei die Phasenverschiebung, die das optische Bauteil (1) der anderen Lichtkomponente (17) aufprägt, so eingestellt oder einstellbar ist, dass sie sich über den Sprung oder der Unstetigkeit hinweg nicht ändert, **dadurch gekennzeichnet, dass** sich die beiden Lichtkomponenten (17, 22) in ihrer Wellenlänge unterscheiden und dass an dem Sprung oder der Unstetigkeit in der Phasenverschiebung zwei unterschiedliche Bereiche des optischen Bauteils (1) aneinander stoßen, die ein unterschiedliches Dispersionsverhalten n(λ) aufweisen, so dass die zwei aneinander angrenzenden Bereiche für die eine Lichtkomponente (22) unterschiedliche optische Weglängen und für die andere Lichtkomponente (17) gleiche optische Weglängen bereitstellen.

2. Optischer Aufbau nach Anspruch 1, **dadurch gekennzeichnet, dass** das Objektiv (19) beide Lichtkomponenten (17, 22) in einen Fokusbereich fokussiert, wobei das optische Bauteil (1) die Wellenfronten (5) der einen Lichtkomponente (22) so deformiert, dass die Intensitätsverteilung der einen Lichtkomponente (22) im Zentrum des Fokusbereichs, in dem die Intensitätsverteilung der anderen Lichtkomponente (17) konzentriert ist, eine Nullstelle aufweist.

3. Optischer Aufbau einem der Ansprüche 1 und 2, **dadurch gekennzeichnet, dass** die eine Lichtkomponente (22) und die andere Lichtkomponente (17) vor dem optischen Bauteil (1) gemeinsam durch einen Lichtleiter (25) und/oder eine Lochblende (12) verlaufen.

4. Optischer Aufbau nach Anspruch 3, **dadurch gekennzeichnet, dass** auch das mit dem Objektiv (19) aus dem Fokusbereich erfasste Licht (20) durch den Lichtleiter (25) und/oder die Lochblende (12) hindurch tritt.

5. Optischer Aufbau nach einem der Ansprüche 1 bis 4, **dadurch gekennzeichnet, dass** ebene Wellenfronten (5, 15) beider Lichtkomponenten (22, 17) auf das optische Bauteil (1) auftreffen.

6. Optischer Aufbau nach einem der Ansprüche 1 bis 5, **dadurch gekennzeichnet, dass** der Sprung oder die Unstetigkeit in der Phasenverschiebung mindestens die Hälfte der Wellenlänge der einen Lichtkomponente (22) beträgt.

7. Optischer Aufbau nach einem der Ansprüche 1 bis 6, **dadurch gekennzeichnet, dass** das optische Bauteil (1) in über jeder normal zu seiner optischen Achse (2) verlaufenden Richtung einen Sprung oder eine Unstetigkeit von mindestens einer viertel Wellenlänge in der Phasenverschiebung aufweist, die es der einen Lichtkomponente (22) aufprägt.

8. Optischer Aufbau nach Anspruch 7, **dadurch gekennzeichnet, dass** die optisch aktive Fläche des optischen Bauteils (1) einen kreisrunden Zentralbereich und eine sich darum kreisringförmig erstreckende Peripherie aufweist, zwischen denen der Unterschied bei der Phasenverschiebung der einen Lichtkomponente (22) die Hälfte ihrer Wellenlänge beträgt.

9. Optischer Aufbau nach Anspruch 7, **dadurch gekennzeichnet, dass** das optische Bauteil (1) der einen Lichtkomponente (22) einen in Umfangsrichtung um seine optische Achse bis auf ihre Wellenlänge zunehmenden Unterschied bei der Phasenverschiebung aufprägt.

10. Optischer Aufbau nach einem der Ansprüche 1 bis 9, **dadurch gekennzeichnet, dass** die beiden unterschiedlichen Bereiche in Richtung der optischen Achse (2) des optischen Bauteils jeweils durch planparallele Flächen begrenzt sind.

11. Optischer Aufbau nach einem der Ansprüche 1 bis 10, **dadurch gekennzeichnet, dass** das optische Bauteil (1) in seinen unterschiedlichen Bereichen unterschiedliche Materialien (8, 9) aufweist.

12. Optischer Aufbau nach einem der Ansprüche 1 bis 10, **dadurch gekennzeichnet, dass** das optische Bauteil (1) in seinen unterschiedlichen Bereichen unterschiedliche Materialkombinationen aufweist, wobei optional in den unterschiedlichen Bereichen dieselben Materialien (8, 9) in unterschiedlichen Dicken vorgesehen sind.

13. Optischer Aufbau nach Anspruch 11 oder 12, **dadurch gekennzeichnet, dass** mindestens eines der Materialien (9) ein temperaturabhängiges Dispersionsverhalten n(λ, T) aufweist, wobei diesem Material eine Temperiervorrichtung zugeordnet ist.

14. Optischer Aufbau nach einem der Ansprüche 11 bis 13, **dadurch gekennzeichnet, dass** mindestens eines der Materialien ein elektrisch veränderbares Dispersionsverhalten n(λ, U) aufweist, wobei diesem Material eine mit einer Spannung U beaufschlagbare Elektrode zugeordnet ist.

15. Optischer Aufbau nach einem der Ansprüche 11 bis 14, **dadurch gekennzeichnet, dass** mindestens eines der Materialien (9) ein Polymer, ein Gel, ein Immersionsöl, eine Farbstofflösung oder ein Flüssigkristall ist.

## Claims

1. Optical assembly comprising an objective lens (19) for projecting two optically different light components (17, 22) into a projection space, and an optical component (1) having an optical axis (2), which deforms wave fronts (5, 6) of the one light component passing therethrough in such a way that the intensity distribution of the one component (22) in the projection space due to interference with itself differs from the intensity distribution of the other light component in the projection space, wherein the wave fronts (15) of the other light component (17) like the wave fronts (5) of the one light component (22) pass through the optical component (1), wherein the optical component (1) does not deform the wave fronts (15) of the other light component (17) and/or is phase-corrected or phase-correctable for the other light component (17), and wherein the optical component (1), over its optically active aperture, with regard to the phase shift which it impresses in the one light component (22), comprises at least a step or an unsteadiness of at least a quarter of the wave length of the one light component (22), wherein the phase shift, which the optical component (1) impresses in the other light component (17) is adjusted or adjustable in such a way that it does not vary over the step or unsteadiness, **characterized in that** the two light components (17, 22) differ in their wave lengths and that, at the step or unsteadiness in the phase shift, two different areas of the optical component (1) adjoin each other, which have different dispersion characteristics n(λ) so that the two adjoining areas provide different optical path lengths for the one light component (22) and same optical path lengths for the other light component (17).

2. Optical assembly of claim 1, **characterised in that** the objective lens (19) focusses both light components (17, 22) in a focus area, wherein the optical component (1) deforms the wave fronts (5) of the one light component (22) in such a way that the intensity distribution of the one light component (22) has a zero point in the centre of the focus area, in which the other light component (17) is concentrated.

3. Optical assembly of any of the claims 1 and 2, **characterised in that** the one light component (22) and the other light component (17), in front of the optical component (1), together pass through a light guide (25) and/or a pinhole (12).

4. Optical assembly of claim 3, **characterised in that** even the light (20) out of the focal area collected by means of the objective (19) passes through the light guide (25) and/or the pinhole (12).

5. Optical assembly of any of the claims 1 to 4, **characterised in that** plane wave fronts (5, 15) of both light components (22, 27) arrive at the optical component (1).

6. Optical assembly of any of the claims 1 to 5, **characterised in that** the step or unsteadiness in the phase shift is at least half the wave length of the one light component (22).

7. Optical assembly of any of the claims 1 to 6, **characterised in that** the optical component (1), in any direction normal to its optical axis (2), comprises a step or unsteadiness of at least a quarter wave length in phase shift, which it impresses in the one light component (22).

8. Optical assembly of claim 7, **characterised in that** the optically active aperture of the optical component (1) has a circular central area and a annular periphery extending around the central area, between which the difference in phase shift of the one light component (22) is half its wave length.

9. Optical assembly of claim 7, **characterised in that** the optical component (1), in the one light component (22), impresses a difference in phase shift increasing in circumferential direction around the optical axis of the optical component (1) up to the wave length of the one light component (22).

10. Optical assembly of any of the claims 1 to 9, **characterised in that** the two different areas, in direction of the optical axis (2) of the optical component, are each delimited by plane-parallel surfaces.

11. Optical assembly of any of the claims 1 to 10, **characterised in that** the optical component (1), in its different areas, comprises different materials (8, 9).

12. Optical assembly of any of the claims 1 to 10, **characterised in that** the optical component (1), in its different areas, comprises different material combinations, wherein, optionally, in the different areas, the same materials (8, 9) are provided in different thicknesses.

13. Optical assembly of claims 11 or 12, **characterised in that** at least one of the materials (9) has a temperature dependent dispersion characteristic n(λ, T), wherein an arrangement for maintaining temperature is associated with this material.

14. Optical assembly of any of the claims 11 to 13, **characterised in that** at least one of the materials has an electrically variable dispersion characteristic n(λ, U), wherein an electrode applying a voltage U is associated with this material.

15. Optical assembly of any of the claims 11 to 14, **characterised in that** the at least one of the materials (9) is a polymer, a gel, an immersion oil, a dye solution or a liquid crystal.

## Revendications

1. Montage optique avec un objectif (19) pour la projection de deux composantes lumineuses (17, 22) optiquement différentes dans un espace de projection et avec un composant optique (1), avec son axe optique (2), qui déforme des fronts d'onde (5, 6) traversants de la composante lumineuse (22) de telle sorte que la répartition d'intensité de la composante lumineuse (22) dans l'espace de projection par interférence avec elle-même se distingue de la répartition d'intensité de l'autre composante lumineuse (17) dans l'espace de projection, les fronts d'onde (15) de l'autre composante lumineuse (17) traversant le composant optique (1) tout comme les fronts d'onde (5) de la composante lumineuse (22), le composant optique (1) ne déformant pas les fronts d'onde (15) de l'autre composante lumineuse (17) et/ou étant corrigé en phase ou pouvant être corrigé en phase pour l'autre composante lumineuse (17), et le composant optique (1) présentant sur sa surface optiquement active au moins un saut ou une inconstance d'au moins un quart de la longueur d'onde de la composante lumineuse (22) dans le déphasage qui affecte le composant de la composante lumineuse (22), le déphasage qui affecte le composant optique (1) de l'autre composante lumineuse (17) étant réglé ou pouvant être réglé de telle sorte qu'il ne varie pas pendant le saut ou l'inconstance, **caractérisé en ce que** les deux composantes lumineuses (17, 22) se distinguent par leur longueur d'onde et **en ce que**, au niveau du saut ou de l'inconstance, deux zones différentes du composant optique (1) se touchent dans le déphasage, qui présentent un comportement en dispersion n(λ) différent de telle sorte que les deux zones limitrophes fournissent des longueurs d'onde optiques différentes pour la composante lumineuse (22) et des longueurs d'onde optiques identiques pour l'autre composante lumineuse (17).

2. Montage optique selon la revendication 1, **caractérisé en ce que** l'objectif (19) focalise les deux composantes lumineuses (17, 22) en une zone de foyer, le composant optique (1) déformant les fronts d'onde (5) de la composante lumineuse (22) de telle sorte que la répartition d'intensité de la composante lumineuse (22) présente un point zéro au centre de la zone de foyer dans laquelle la répartition d'intensité de l'autre composante lumineuse (17) est concentrée.

3. Montage optique selon l'une des revendications 1 et 2, **caractérisé en ce que** la composante lumineuse (22) et l'autre composante lumineuse (17), avant le composant optique (1), traversent conjointement un conduit de lumière (25) et/ou un diaphragme à trou (12).

4. Montage optique selon la revendication 3, **caractérisé en ce que** même la lumière (20) détectée avec l'objectif (19) à partir de la zone de foyer traverse le conduit de lumière (25) et/ou le diaphragme à trou (12).

5. Montage optique selon l'une des revendications 1 à 4, **caractérisé en ce que** des fronts d'onde (5, 15) plans des deux composantes lumineuses (22, 17) rencontrent le composant optique (1).

6. Montage optique selon l'une des revendications 1 à 5, **caractérisé en ce que** le saut ou l'inconstance dans le déphasage représente au moins la moitié de la longueur d'onde de la composante lumineuse (22).

7. Montage optique selon l'une des revendications 1 à 6, **caractérisé en ce que** le composant optique (1), sur chaque direction perpendiculaire à son axe optique (2), présente un saut ou une inconstance d'au moins un quart de longueur d'onde dans le déphasage qui affecte le composant de la composante lumineuse (22).

8. Montage optique selon la revendication 7, **caractérisé en ce que** la surface optiquement active du composant optique (1) présente une zone centrale circulaire et une périphérie qui s'étend autour en forme de cercle, entre lesquelles la différence lors du déphasage de la composante lumineuse (22) est égale à la moitié de sa longueur d'onde.

9. Montage optique selon la revendication 7, **caractérisé en ce que** le composant optique (1) de la composante lumineuse (22) affecte lors du déphasage une différence qui augmente dans la direction circonférentielle autour de son axe optique jusqu'à sa longueur d'onde.

10. Montage optique selon l'une des revendications 1 à 9, **caractérisé en ce que** les deux zones différentes sont, en direction de l'axe optique (2) du composant optique, limitées respectivement par des surfaces planes parallèles.

11. Montage optique selon l'une des revendications 1 à 10, **caractérisé en ce que** le composant optique (1) présente différents matériaux (8, 9) dans ses différentes zones.

12. Montage optique selon l'une des revendications 1 à 10, **caractérisé en ce que** le composant optique (1) présente différentes combinaisons de matériaux dans ses différentes zones, les mêmes matériaux (8, 9) étant, de façon optionnelle, prévues en différentes épaisseurs dans les différentes zones.

13. Montage optique selon la revendication 11 ou 12, **caractérisé en ce qu**'au moins un des matériaux (9) présente un comportement en dispersion n(λ, T) qui est fonction de la température, un dispositif d'équilibrage de température étant affecté à ce matériau.

14. Montage optique selon l'une des revendications 11 à 13, **caractérisé en ce qu'**au moins un des matériaux présente un comportement en dispersion électriquement variable n(λ, U), une électrode pouvant être alimentée avec une tension U étant affectée à ce matériau.

15. Montage optique selon l'une des revendications 11 à 14, **caractérisé en ce qu**'au moins un des matériaux (9) est un polymère, un gel, une huile à immersion, une solution de colorant ou un cristal liquide.
